# EUROPEAN PATENT APPLICATION

(11) **EP 1 090 885 A1**
(43) Date of publication of application: **11.04.2001**
(21) Application number: 00121257.0
(22) Date of filing: 04.10.2000
(51) Int. Cl.: C02F 9/06

(54) **Process for demineralizing water, particularly by electrodeionization**

(30) Priority: 06.10.1999 IT MI992092
(71) Applicant: Ionics Italba S.P.A., 20126 Milano (IT)
(72) Inventor: Vaccaro, Guido, 20133 Milano (IT); Ciallie', Franco, 20090 Segrate (Prov. of Milano) (IT)
(74) Representative: Modiano, Guido, Dr.-Ing.

(57) **Abstract**

A process for demineralizing water, particularly by electrodeionization, which combines:
-- an initial treatment of selective removal of divalent ions from the water by absorption on a weak cationic resin (12) in an acid cycle, in order to produce softened water having a concentration of divalent ions of 10 µg/l or less, with
-- a treatment for electrodeionization of the softened water.

## Description

The present invention relates to a process for demineralizing water, particularly by electrodeionization.

Specifically, the present invention relates to a process and to a corresponding apparatus for removing salts dissolved in water for industrial use, in which deionization is performed by combining a specific preliminary water softening treatment with an electrodeionization treatment.

The field of application of the present invention is the field of industrial treatments for demineralizing water which use electrodialysis (ED) units.

Electrodeionization is a water demineralization process in which the electrolytes present in the water are transferred from a first fluid to a second fluid under the influence of a flow of current supplied by an electrodialysis unit, in which at least some of the flow compartments are packed or filled with ion-exchange material, usually constituted by resin pearls.

Electrodeionization is a water deionization treatment which does not use chemical reagents and produces demineralized water of high quality, with very low electrical conductivity. This kind of water currently has various applications, ranging from the supply of nuclear reactors, electric power stations to the manufacturing technology of semiconductors, chemical products, pharmaceutical products and microelectronic components.

The use of electrodeionization in water treatment is described extensively in scientific literature, for example in US patents no. 2,815,320 in the name of Kollsman, 3,149,061, 3,291,713, 4,871,431, 5,066,375 in the name of Parsi, 4,632,745, 4,931,160, 4,956,071 in the name of Giuffrida and others.

The main use of electrodeionization in industrial installations is the final polishing of the production of ultrapure water as a replacement of conventional mixed-bed ion-exchange systems. Accordingly, typical installations usually comprise, upstream of the electrodeionization, an electrodialysis or reverse-osmosis stage, which remove most of the salt content of the input water.

Despite this situation, the electrodeionization process is not free from drawbacks in use, since it allows effective deionization of water provided that said water has a reduced content of calcium salts, which may lead to treatment problems.

In particular, it has been observed that the precipitation of scarcely soluble salts, such as calcium carbonate and sulfate, when their concentration exceeds threshold values, leads to the formation of scale in the electrodeionization apparatus. For example, in conventional electrodeionization systems, calcium carbonate scale is often found to form on the cathode surface, where the electrolysis of the water generates the base and gaseous hydrogen. In particular, the base can react with bicarbonate to produce insoluble carbonate.

The formation of scale leads to reduced efficiency of the electrodeionization system because of the increase in electrical resistance and because it slows the flow of water along the electrodeionization apparatus.

A threshold level for the concentration of calcium ions dissolved in water, above which operating problems often occur and it is difficult to maintain the electrodeionization system in efficient operating conditions, has now been found. This threshold level is equal to a concentration of calcium of more than 10 µg/l.

It is evident that such low calcium levels are not normally obtainable even with the above cited electrodialysis and reverse-osmosis desalination treatments.

It is also evident that this level is distinctly different from the concentration of calcium that is commonly present in water and is between a few mg/l and a few hundred mg/l.

So far, the attempts made to eliminate the problems observed in the use of electrodeionization have failed the goal.

Attempts to remove the divalent ions present in the water by chemical precipitation or ion exchange have yielded, for this application, scarcely encouraging results, both because the removal, by using chemical reagents, goes against the fundamental principle of electrodeionization, and because of the difficulties encountered in reducing the calcium concentration below the threshold value of 10 µg/l.

Accordingly, presently there is the need to have a water softening process which is capable of removing large amounts of Ca, up to and over 99.98%, in order to provide water with a divalent ion content which is particularly adapted to be subjected to demineralization by electrodeionization.

The aim of the present invention is to minimize the incidence of the drawbacks that arise in the execution of procedures for demineralizing water by electrodeionization.

Within the scope of this aim an object of the present invention is to provide a procedure for demineralizing water, particularly by electrodeionization, which can produce a highly pure water with high resistivity.

Another object of the present invention is to provide a water demineralization apparatus which can effectively remove the ions present in the water with low operating costs.

Another object of the present invention is to provide a process for demineralizing water which uses an electrodeionization apparatus whose operational capacity is not limited by the incidence of scale forming caused by the deposition of the calcium salts commonly present in water.

In view of this aim, these and other objects which will become better apparent hereinafter, according to a first aspect of the present invention, a process for demineralizing water, particularly by electrodeionization, is provided which combines:
-- a preliminary electrodialysis or reverse-osmosis treatment for the selective removal of the residual divalent ions from osmotized water by absorption on a weak cationic resin in an acid cycle, in order to produce a softened water having a concentration of divalent ions ≤10 µg/l, preferably ≤5 µg/l, with
-- a treatment for electrodeionization of the softened water.

The initial treatment according to the invention is advantageously aimed at removing from the water the magnesium and calcium ions, particularly the latter.

Within the scope of the invention, it has been observed that a particularly effective removal is achieved by using a weak cationic resin (carboxylic resin). The preferential use of these resins is due not only to their high efficiency and removal selectivity, but also to their ability to be regenerated once they are close to saturation, for example by circulating an acid solution in countercurrent.

It has been observed that by providing a selective initial removal of divalent ions from the water until the threshold value of 10 µg/l is reached, one obtains water which has optimum characteristics for effective deionization by means of an electrodeionization treatment.

In particular, the Applicant has observed that a particularly effective selective removal is achieved by ion-exchange treatment on a weak cationic resin in an acid cycle.

The combination of an ion-exchange treatment on a resin with an electrodeionization treatment produces highly pure water which is particularly adapted for supplying nuclear reactors and electric power stations or for producing chemical, pharmaceutical and microelectronic products such as semiconductors.

According to one embodiment of the present invention, the input water is subjected to a preliminary treatment step.

In particular, when the input water is highly saline, a preliminary reverse-osmosis treatment is advantageously provided in order to produce an initial removal of the ions. The preliminary treatment step can also provide for the removal of the organic and colloidal substances and other impurities present in the water, for example by adsorption on activated charcoal. The pretreated water is thus in a form which is highly adapted for subjecting it to the demineralization process according to the invention.

According to another aspect of the present invention, an apparatus for demineralizing water, particularly by electrodeionization, is provided which comprises an ion-exchange column arranged upstream of an electrodeionization apparatus.

Advantageously, the ion-exchange column comprises a weak cationic resin for selective removal of the ions from the water, which is immobilized by an inert mass preferably constituted by polyethylene granules.

Further characteristics and advantages of the present invention will become better apparent from the description of a preferred but not exclusive embodiment of the apparatus according to the invention, illustrated only by way of non-limitative example in the accompanying drawing, wherein:
Figure 1 is a sectional elevation view, taken along a longitudinal plane, of an ion-exchange column according to an embodiment of the apparatus according to the invention;
Figure 2 is a schematic perspective view of a detail of an electrodeionization apparatus according to an embodiment of the apparatus according to the invention.

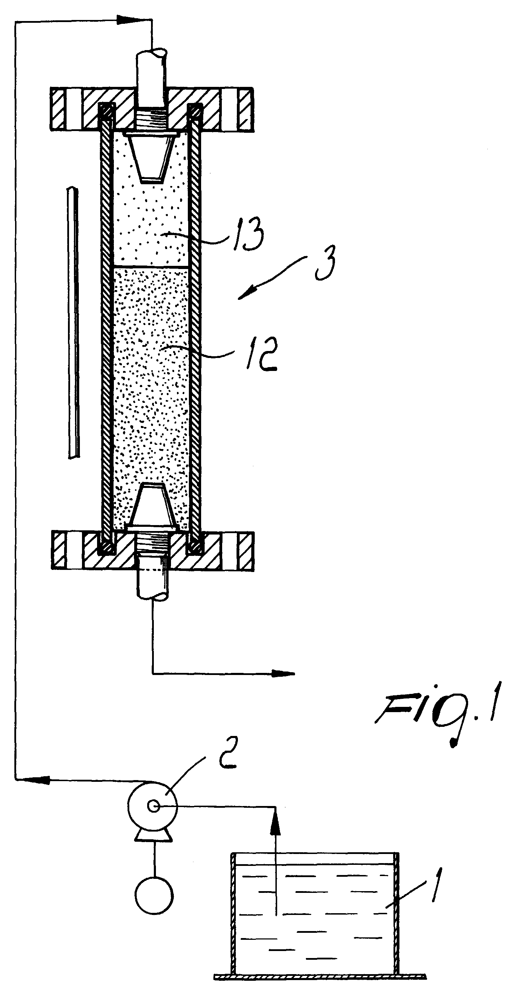

With reference to Figure 1, the untreated water is taken from a tank 1 and pumped by a feed pump 2 into an ion-exchange column 3, where the treatment for the selective removal of the divalent ions is performed. Inside the column there is a lower layer 12, constituted by a weak cationic resin, preferably a carboxylic resin in granular form with a particle size between 0.3 and 0.7 mm, and an upper layer 13 constituted by an inert mass for immobilizing the resin. The layer of inert mass is advantageously constituted by polyethylene granules.

The ion-exchange column 3 is supplied with water drawn from the tank 1 by pumping and circulated inside the column 3. The ion exchange between the resin and the water occurs during transit along the column. At the outlet of the column, the water is softened in terms of its calcium ion content and is transferred to the electrodeionization apparatus, not shown.

The water in output from the column advantageously has calcium concentrations of 10 µg/l or less.

The weak cationic resin is regenerated by producing the flow of an acid solution (from HCl), preferably in countercurrent.

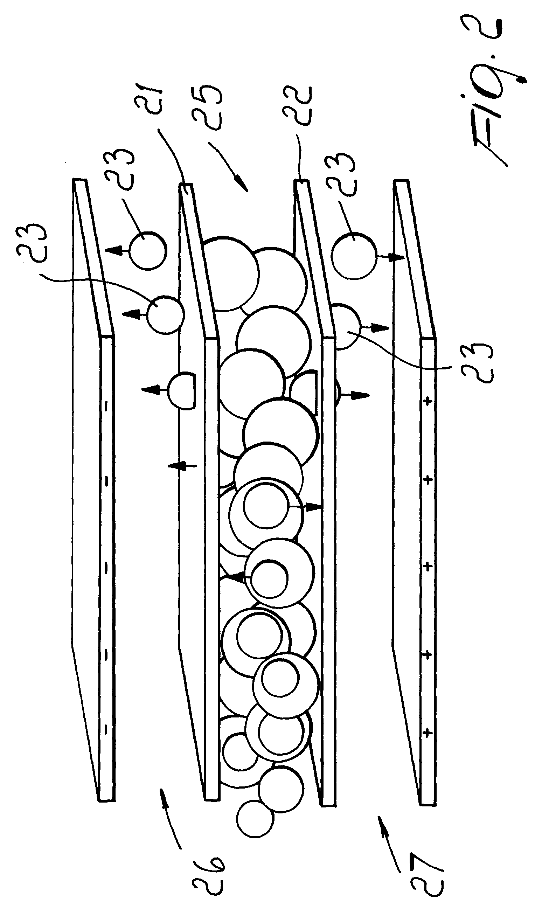

The accompanying Figure 2 schematically illustrates the detail of an electrodeionization apparatus provided with a cationic membrane 21 and an anionic membrane 22, both of which are affected by a flow of a DC generated electric current. The figure shows ions 23, which are forced by the electric field to migrate from dilution compartments 25 to concentration compartments 26, 27. A system of this kind is used, for example, in the electrodeionization units manufactured by Ionics Incorporated, Watertown, MA, USA.

The following example is provided merely as illustration of the present invention and must not be construed as limiting its scope as defined by the accompanying claims.

### EXAMPLE 1

The initial treatment for selective removal of the divalent ions from the water by absorption on weak cationic resin in an acid cycle was performed in order to produce a softened water with a divalent ion concentration of 10 µg/l or less, particularly adapted to be subjected to a subsequent electrodeionization treatment according to the invention.

An ion-exchange column of the type shown in Figure 1 was used to perform the initial treatment. The column was supplied with a stream of water generated by a feed pump with a flow-rate of 96 l/h, which produced a transit speed of 41.9 m/h in the empty column and a specific flow-rate of 34.9 volumes of resin/hour. The column had a diameter of 0.054 m, a height of 2 m, a layer height of 1.2 m, and a resin volume of 2.75 l.

The same pump was used to produce the countercurrent flow of a solution of HCL to regenerate the resin.

The results of the selective softening action are summarized in the following Table 1, which lists the concentrations of Ca and Mg divalent ions before and after the treatment. The concentration values observed at the end of the treatment for said ions were 10 µg/l or less up to the 12^{th} day, when values close to saturation of the cationic resin were being approached.

The specific load values, expressed as calcium carbonate, reached during the days in which the apparatus was running are listed in Table 2.

**Table 1**

| **Date of sample** | **Feed** | | | | **Product** | | |
|---|---|---|---|---|---|---|---|
| | **pH** | **Alkalinity** | **Ca** | **Mg** | **pH** | **Ca** | **Mg** |
| | | mg CaCo₃/l | mg/l | mg/l | | mg/l | mg/l |
| Day 1 | 6.40 | 7.500 | 0.920 | 0.210 | 4.60 | 0.004 | 0.001 |
| Day 2 | 6.60 | 6.000 | 0.960 | 0.200 | 4.66 | <0.003 | |
| Day 3 | 6.66 | 5.500 | 0.970 | 0.220 | 4.84 | <0.003 | |
| Day 4 | 6.60 | 6.500 | 1.200 | 0.190 | 4.92 | <0.003 | <0.001 |
| Day 5 | 6.60 | 6.500 | 0.930 | 0.210 | 4.92 | 0.002 | |
| Day 6 | 6.70 | 8.000 | 1.400 | 0.240 | 4.85 | <0.003 | |
| Day 7 | 6.52 | 7.500 | 1.400 | 0.230 | 3.98 | <0.003 | <0.001 |
| Day 8 | 6.45 | 6.250 | 0.670 | 0.180 | 4.85 | 0.004 | |
| Day 9 | 6.50 | 4.500 | 0.710 | 0.190 | 4.80 | 0.010 | |
| Day 10 | 6.57 | 5.000 | 0.900 | 0.180 | 4.88 | <0.002 | Traces |
| Day 11 | 6.40 | 5.500 | 0.680 | 0.170 | 4.78 | 0.002 | |
| Day 12 | 6.42 | 6.500 | 1.300 | 0.200 | 4.37 | 0.019 | |
| Day 13 | 6.50 | 5.350 | 1.280 | 1.190 | 4.80 | 0.010 | Traces |
| Day 14 | 6.60 | 6.850 | 1.200 | 0.185 | 4.83 | 0.011 | |
| **AVERAGE** | 6.54 | 6.246 | 1.037 | 0.200 | 4.72 | 0.008 | 0.001 |

**Table 2**

| **Date of sample** | **Specific progressive load on resin [g CaCo**_{**3**}**/l]** | | | | | | | |
|---|---|---|---|---|---|---|---|---|
| | **on instantaneous values** | | | | **on the average** | | | |
| | **Ca** | **Mg** | **Ca + Mg** | **Alkalinity** | **Ca** | **Mg** | **Ca + Mg** | **Alkalinity** |
| Day 1 | 0.00 | 0.00 | 0.00 | 0.00 | 0.00 | 0.00 | 0.00 | 0.00 |
| Day 2 | 1.98 | 0.75 | 2.73 | 6.47 | 2.24 | 0.71 | 2.94 | 5.38 |
| Day 3 | 4.02 | 1.44 | 5.47 | 11.57 | 4.44 | 1.41 | 5.85 | 10.70 |
| Day 4 | 6.07 | 2.21 | 8.28 | 16.21 | 6.63 | 2.10 | 8.73 | 15.97 |
| Day 5 | 8.83 | 2.93 | 11.76 | 22.20 | 9.02 | 2.86 | 11.87 | 21.72 |
| Day 6 | 12.57 | 4.32 | 16.89 | 32.65 | 13.18 | 4.18 | 17.36 | 31.76 |
| Day 7 | 15.33 | 5.10 | 20.43 | 38.96 | 15.23 | 4.83 | 20.06 | 36.69 |
| Day 8 | 18.47 | 5.95 | 24.42 | 45.69 | 17.56 | 5.56 | 23.12 | 42.30 |
| Day 9 | 19.80 | 6.54 | 26.34 | 50.66 | 19.62 | 6.22 | 25.84 | 47.26 |
| Day 10 | 21.36 | 7.22 | 28.57 | 54.59 | 21.88 | 6.93 | 28.82 | 52.72 |
| Day 11 | 23.22 | 7.83 | 31.06 | 58.74 | 24.04 | 7.62 | 31.65 | 57.91 |
| Day 12 | 27.68 | 9.67 | 37.35 | 73.15 | 30.83 | 9.77 | 40.60 | 74.28 |
| Day 13 | 30.12 | 10.29 | 40.41 | 78.04 | 32.78 | 10.39 | 43.17 | 78.97 |
| Day 14 | 32.52 | 10.87 | 43.39 | 82.04 | 34.72 | 11.00 | 45.72 | 83.65 |

The resin of the ion-exchange column was then subjected to regeneration procedure according to the specifications listed in detail in the following Table 3.

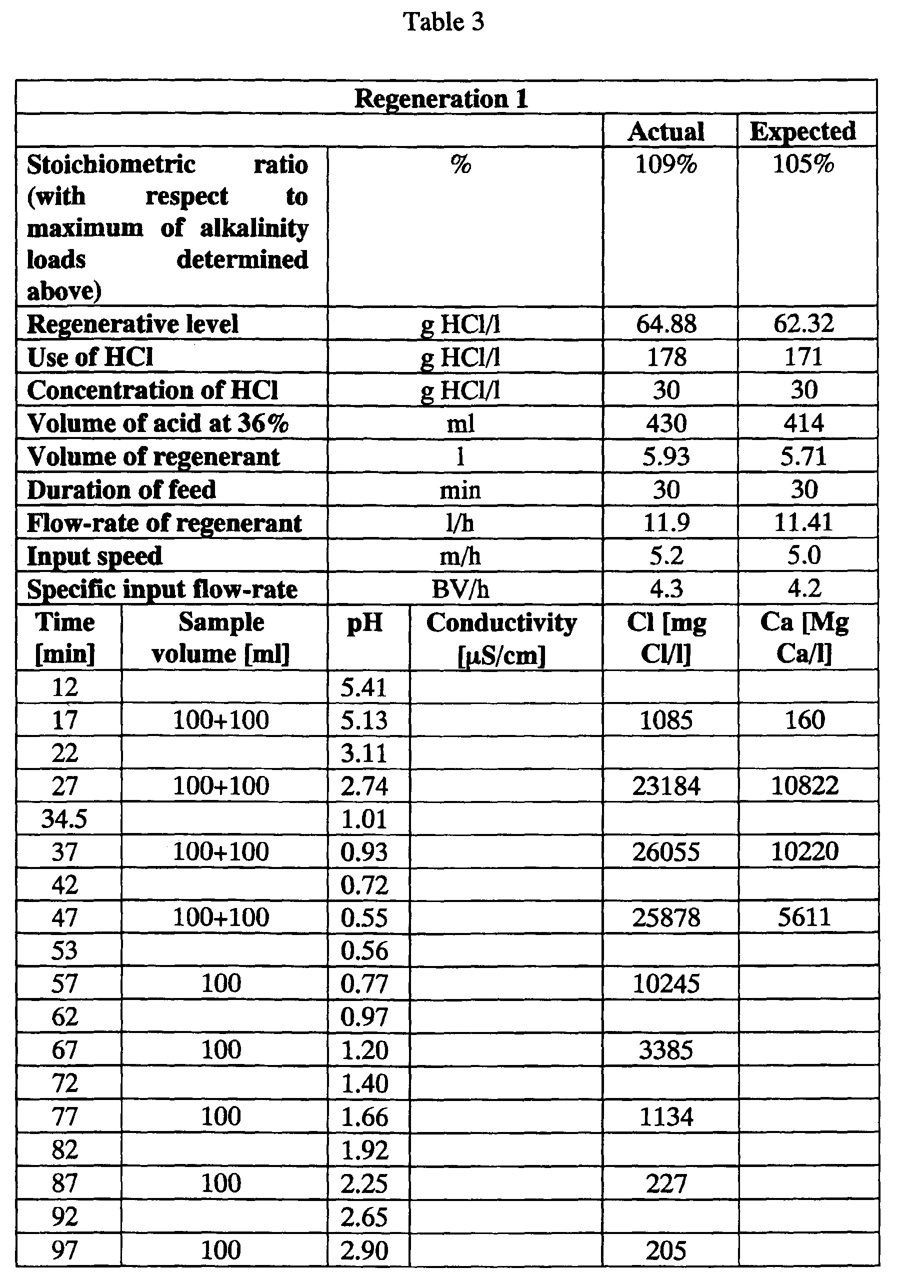

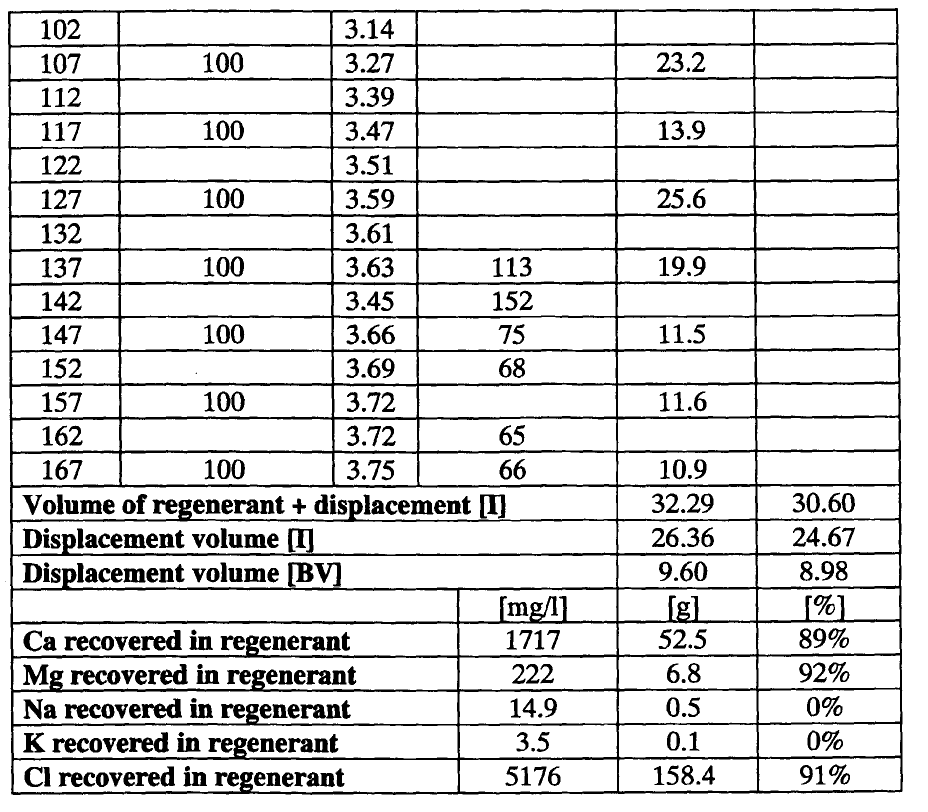

The disclosures in Italian Patent Application No. MI99A002092 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A process for demineralizing water, particularly by electrodeionization, characterized in that it combines:
-- an initial treatment of selective removal of divalent ions from the water by absorption on a weak cationic resin in an acid cycle, in order to produce softened water having a concentration of divalent ions of 10 µg/l or less, with
-- a treatment for electrodeionization of the softened water.

2. The process according to claim 1, characterized in that said divalent ions are calcium ions.

3. The process according to claim 1, characterized in that said weak cationic resin is a carboxylic resin.

4. The process according to claim 1, characterized in that said initial treatment occurs in an ion-exchange column.

5. The process according to claim 4, characterized in that said ion-exchange column comprises an inert mass for immobilizing the weak cationic resin.

6. The process according to claim 5, characterized in that said weak cationic resin is of the type that can be regenerated by circulating an acid solution.

7. The process according to claim 6, characterized in that said acid solution is a solution of hydrochloric acid.

8. The process according to any one of claims 1 to 7, characterized in that said divalent ion concentration is equal to, or lower than, 5 µg/l.

9. The process according to any one of claims 1 to 8, characterized in that it further comprises a preliminary water treatment step.

10. The process according to claim 9, characterized in that said preliminary step comprises a reverse-osmosis treatment.

11. The process according to claim 9 or 10, characterized in that said preliminary step comprises the removal of the organic and colloidal substances and other impurities present in the water.

12. The process according to claim 11, characterized in that said preliminary removal step occurs by adsorption on activated charcoal.

13. An apparatus for demineralizing water, particularly by electrodeionization, characterized in that it comprises an ion-exchange column which is arranged upstream and is connected to an electrodeionization apparatus.

14. The apparatus according to claim 13, characterized in that said column includes an inert mass for immobilizing a weak cationic resin.

15. The apparatus according to claim 14, characterized in that said inert mass is constituted by polyethylene granules and said weak cationic resin is a carboxylic resin.
